(19) Europäisches Patentamt European Patent Office Office européen des brevets

(11) **EP 4 357 212 A1**

(12) **EUROPEAN PATENT APPLICATION**

(43) Date of publication:
**24.04.2024   Bulletin 2024/17**

(21) Application number: **22202948.0**

(22) Date of filing: **21.10.2022**

(51) International Patent Classification (IPC):
*B60W 30/08* (2012.01)     *B60W 60/00* (2020.01)
*G05D 1/00* (2024.01)       *G05D 1/02* (2020.01)
*G06D 1/02* (2006.01)       *G06N 5/00* (2023.01)
*G06V 20/56* (2022.01)

(52) Cooperative Patent Classification (CPC):
**G06N 5/025; B60W 30/08; B60W 60/0011;
B60W 60/0018;** G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Zenseact AB**
**417 56 Göteborg (SE)**

(72) Inventors:
• **GYLLENHAMMAR, Magnus**
  **435 43 Pixbo (SE)**
• **SANDBLOM, Fredrik**
  **431 66 Mölndal (SE)**
• **RODRIGUES DE CAMPOS, Gabriel**
  **414 66 Göteborg (SE)**

(74) Representative: **Valea AB**
**Box 1098**
**405 23 Göteborg (SE)**

(54)   **ADS DEVELOPMENT**

(57)    The present disclosure relates to a method performed by an ADS development system (1) for supporting proving fulfilment of safety requirements imposed on Automated Driving Systems, ADSs. The ADS development system derives (1001) based on the safety requirements and predeterminable models for a set of operational parameters of an ADS (21), a corresponding set of parameter-specific ADS safe driving policies, each safe driving policy exhibiting a respective uncertainty inflicted by an uncertainty of the corresponding operational parameter. The ADS development system further identifies (1002) at least a first parameter-specific ADS safe driving policy inflicted with an uncertainty fulfilling predeterminable criteria, which criteria filters out uncertainties indicating, respectively, that the corresponding operational parameter needs to be further observed in order to relax the ADS's currently allowed safety requirements-fulfilled ADS safe driving policy. Moreover, the ADS development system identifies (1003) at least a first geographical location, e.g. of an ADS-compliant digital map, exhibiting conditions allowing the operational parameter(s) in need of further observance, to be observed. The ADS development system further generates (1004) a mapping associating the identified at least first geographical location with the operational parameter(s) in need of further observance.

The disclosure also relates to an ADS development system in accordance with the foregoing, an arrangement - for instance an offboard system (114) and/or a vehicle (2) comprising such an ADS development system, and a respective corresponding computer program product and non-volatile computer readable storage medium.

Fig. 1                    1 ADS development system

Processed by Luminess, 75001 PARIS (FR)

**Description**

TECHNICAL FIELD

The present disclosure relates to supporting proving fulfilment of safety requirements imposed on an ADS.

BACKGROUND

Within the automotive field, there has for quite some years been activity in development of autonomous vehicles. An increasing number of modern vehicles have advanced driver-assistance systems, ADAS, to increase vehicle safety and more generally road safety. ADAS - which for instance may be represented by adaptive cruise control, ACC, lane centering, automatic lane changes, semi-automated parking, etc. - are electronic systems that may aid a vehicle driver while driving. Moreover, in a not-too-distant future, Autonomous Driving, AD, will to greater extent find its way into modern vehicles. AD along with ADAS will herein be referred to under the common term Automated Driving System, ADS, corresponding to all different levels of automation, for instance as defined by the SAE J3016 levels (0 - 5) of driving automation. An ADS may be construed as a complex combination of various components that can be defined as systems where perception, decision making, and operation of the vehicle - at least in part - are performed by electronics and machinery instead of a human driver. This may include awareness of surroundings as well as handling of the vehicle. While the automated system has control over the vehicle, it allows the human operator to leave all or at least some responsibilities to the system. For instance, an ADS at level 4 or above - such as defined by SAE J3016 - may offer unsupervised automated driving, which thus may lead to enhanced comfort and convenience by allowing vehicle occupants such as the driver to engage in non-driving related tasks, or vehicles that can operate without humans present at all such as commercial vehicles. To perceive its surroundings, an ADS commonly combines a variety of sensors, such as e.g. radar, lidar, sonar, camera, navigation and/or positioning system e.g. GNSS such as GPS, odometer and/or inertial measurement units, upon which advanced control systems may interpret sensory information to identify appropriate navigation paths, as well as obstacles and/or relevant signage.
Ensuring safety is arguably one of the largest remaining challenges before wide-spread market adoption of ADSs. One central aspect is how to provide evidence for the fulfilment of the safety claims and, in particular, how to produce a predictive and reliable safety case considering both the absence and the presence of faults in the ADS. In order to provide such evidence, there is a need for describing and modelling the different elements of the ADS and its operational context - e.g. models of event exposure, sensing and perception models, as well as e.g. actuation and closed-loop behaviour representations, as known in the art. However, although increased knowledge of the ADS and its operational context - as measured by more collected data or operational hours - is known to contribute to increased ADS performance while ensuring the fulfilment of the ADSs' safety requirements, there is room for improvement in proving fulfilment of said safety requirements.

SUMMARY OF THE INVENTION

It is therefore an object of embodiments herein to provide an approach for in an improved and/or alternative manner support proving fulfilment of safety requirements imposed on an ADS.
The object above may be achieved by the subject-matter disclosed herein. Embodiments are set forth in the appended claims, in the following description and in the drawings.
The disclosed subject-matter relates to a method performed by an ADS development system for supporting proving fulfilment of safety requirements imposed on ADSs. The ADS development system derives based on the safety requirements and predeterminable models for a set of operational parameters of an ADS, a corresponding set of parameter-specific ADS safe driving policies, each safe driving policy exhibiting a respective uncertainty inflicted by an uncertainty of the corresponding operational parameter. The ADS development system further identifies at least a first parameter-specific ADS safe driving policy inflicted with an uncertainty fulfilling predeterminable criteria, said criteria filtering out uncertainties indicating, respectively, that the corresponding operational parameter needs to be further observed in order to relax the ADS's currently allowed safety requirements-fulfilled ADS safe driving policy. Moreover, the ADS development system identifies at least a first geographical location, e.g. of an ADS-compliant digital map, exhibiting conditions allowing the operational parameter(s) in need of further observance, to be observed. Furthermore, the ADS development system generates a mapping associating the identified at least first geographical location with the operational parameter(s) in need of further observance.
The disclosed subject-matter further relates to an ADS development system for - and/or adapted and/or configured for - supporting proving fulfilment of safety requirements imposed on ADSs. The ADS development system comprises a policies deriving unit for - and/or adapted and/or configured for - deriving based on the safety requirements and predeterminable models for a set of operational parameters of an ADS, a corresponding set of parameter-specific ADS safe driving policies, each safe driving policy exhibiting a respective uncertainty inflicted by an uncertainty of the corresponding operational parameter. The ADS development system further comprises a policy identifying unit for and/or adapted and/or configured for - identifying at least a first parameter-specific ADS safe driving policy inflicted with an uncertainty fulfilling predeterminable criteria, which criteria filters out uncertainties indicating, respectively, that the corresponding operational parameter needs to be further observed in order to relax the ADS's currently allowed safety requirements-fulfilled ADS safe driving policy. Moreover, the ADS development system comprises a locations identifying unit for - and/or adapted and/or configured for-identifying at least a first geographical location, e.g. of an ADS-compliant digital map, exhibiting conditions allowing the operational parameter(s) in need of further observance, to be observed. The ADS development system furthermore comprises a mapping generating unit for - and/or adapted and/or configured for - generating a mapping associating the identified at least first geographical location with the operational parameter(s) in need of further observance.

Furthermore, the disclosed subject-matter relates to an arrangement, for instance an offboard system and/or a vehicle, comprising an ADS development system as described herein.

Moreover, the disclosed subject-matter relates to a computer program product comprising a computer program containing computer program code means arranged to cause a computer or a processor to execute the steps of am ADS development system described herein, stored on a computer-readable medium or a carrier wave.

The disclosed subject-matter further relates to a non-volatile computer readable storage medium having stored thereon said computer program product.

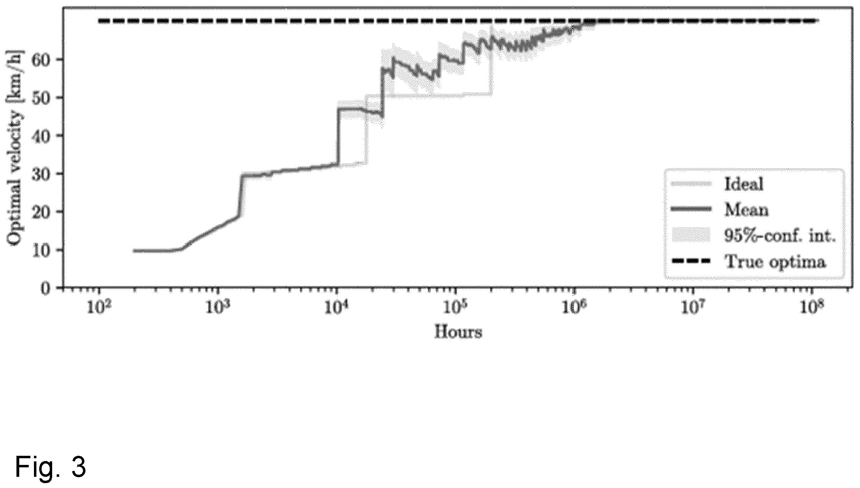

Thereby, there is introduced an approach enabling improved and/or optimized performance growth and/or development gain - such as incremental improvements - of an ADS. That is, since there is derived based on the safety requirements and predeterminable models for a set of operational parameters of an ADS, a corresponding set of parameter-specific ADS safe driving policies, each safe driving policy exhibiting a respective uncertainty inflicted by an uncertainty of the corresponding operational parameter, there is obtained and/or calculated from modelling framework(s) for the ADS, one or more safe driving policies - such as safe driving speeds - each restricted by a respective differing operational parameter - such as event rate and/or probability of sensor failure - which safe driving policies each are inflicted with a respective uncertainty inherited from an uncertainty of the corresponding restricting operational parameter. Accordingly, there may be modelled respective operational parameter's influence on the ADS's safe driving behaviour - subsequently its performance - as restricted by the safety requirements imposed on the ADS, where for instance the safe driving behaviour by which the ADS currently is allowed to be manoeuvred may be dictated e.g. by the strictest of the derived safe driving behaviours, such as by the lowest of derived safe driving speeds. In other words, given a methodology or system for deriving a safe driving policy given a set of safety requirements and estimations of operational parameters - such as event exposure, system error rates, emergency capabilities, etc. - e.g. as known in the art, it is possible to derive the currently allowed optimal performance policy that fulfil the safety requirements of the ADS. It is further possible to derive the impact from changes to each estimated operational parameter - e.g. represented by incremental improvements - considering increased knowledge of such parameters. This is illustrated in exemplifying Fig. 3, depicting in an exemplifying manner incremental improvements to an allowed ADS safe driving behaviour - here safe speed - when accounting for updated estimates of - here - perception error rates and event exposure rates. Accordingly, operational parameters influencing the ADS performance, and the effort to improve each respective parameter estimation, may be derived from the predeterminable models - e.g. rate estimation models - and/or modelling framework(s).

Furthermore, that is, since there is identified at least a first parameter-specific ADS safe driving policy inflicted with an uncertainty fulfilling predeterminable criteria, which criteria filters out uncertainties indicating, respectively, that the corresponding operational parameter needs to be further observed in order to relax the ADS's currently allowed safety requirements-fulfilled ADS safe driving policy, there may be found one or more of the operational parameters limiting - and/or next in line to be limiting - the performance of the ADS. Accordingly, at least a first parameter-specific ADS safe driving policy deemed relevant for further observance, may be selected and/or pinpointed out of the derived set of parameter-specific ADS safe driving policies. Thus, by evaluating and/or assessing the - by respective operational parameters restricted - ADS safe driving policies and their respective inflicted uncertainties, it may be filtered out the ADS safe driving policies with their respective uncertainties - and subsequently the operational parameters - that affect the ADS's safe driving behaviour - and thus performance - to great and/or greatest extent. Accordingly, it may be identified what data - i.e. where additional data - would have great and/or the most impact on the ADS's performance. In other words, it may be analyzed and subsequently filtered out the operational parameter(s) currently limiting and/or next of limiting the performance of the ADS, for which further knowledge and estimates would and/or could have a high potential to improve ADS efficiency, e.g. by being relaxed the most by gathering of more data. Expressed differently, there may first be identified a set of parameters that are safe since they are conservatively selected with respect to uncertainties, upon which there is then analyzed which parameters are limiting to the ADS and also have large uncertainties associated, which indicates that more evidence may make the ADS more efficient. When using operational data and estimating e.g. rates thereof, it is further possible to derive the amounts of data required to achieve the desired impact on the e.g. rate estimates. Thus, in addition to having the influencing factors on the - e.g. safe - performance of the ADS, there may also be derived the efforts needed to reach the next performance increase and/or jump - such as an incremental improvement as illustrated in an exemplifying manner in Fig. 3 - which the predeterminable criteria potentially additionally may take into consideration.

Moreover, that is, since there is identified at least a first geographical location, e.g. of an ADS-compliant digital map, exhibiting conditions allowing the operational parameter(s) in need of further observance, to be observed, there is found locations such as regions, road sections, road scenarios, stationary traffic environments, etc. - such as of, in and/or derived from an HD and/or SD map and/or such as associated with geographical coordinates and/or a geographical area - having characteristics, properties and/or attributes supporting the operational parameter(s) specific to the parameter-specific ADS safe driving policy or policies fulfilling the uncertainty conditions, to be observable or at least potentially observable. Accordingly, there may be pinpointed locations enabling operational parameters - such as e.g. event rate and/or probability of sensor failure - identified to be needing further observing in order to relax the ADS's currently allowed safety requirements-fulfilled ADS safe driving policy, to be observed, potentially under temporal constraints.

Furthermore, that is, since there is generated a mapping associating the identified at least first geographical location with the operational parameter(s) in need of further observance, there is compiled and/or created a mapping - such as a heat map - which connects - e.g. attributes - the operational parameter(s) identified and/or determined to be needing further observance, to the geographical locations found to exhibit conditions allowing said operational parameter(s), to be observed. Accordingly, in the mapping there is included - attributed with respective relevant operational parameter(s) - corresponding geographical location(s) identified as being relevant for subjecting and/or exposing a potential ADS-equipped vehicle at said location(s), to the corresponding operational parameter(s). Thus, there is provided a mapping such as a heat map, pointing out locations which may represent situations where the identified operational parameter(s) may be experienced and/or observed, potentially under temporal constraints such as e.g. during a certain time of day etc. Thus, targeted data collection may be supported, enabling subsequent fleet testing and/or data collection to be targeted to locations where knowledge and estimates of said operational parameters would have a high potential to improve ADS efficiency and have a high potential to be possible to measure. In other words, according to the introduced concept, there is supported - and subsequently enabled - improved and/or optimized data collection, and consequently, supported - and subsequently enabled - continuous, improved and/or optimized performance growth of an ADS, with the additional benefit of lowered time-to-market and/or development costs.

For that reason, an approach is provided for in an improved and/or alternative manner support proving fulfilment of safety requirements imposed on an ADS.

The technical features and corresponding advantages of the above-mentioned method will be discussed in further detail in the following.

BRIEF DESCRIPTION OF THE DRAWINGS

The various aspects of the non-limiting embodiments, including particular features and advantages, will be readily understood from the following detailed description and the accompanying drawings, in which:

Fig. 1 is a schematic block diagram illustrating an exemplifying ADS development system according to embodiments of the disclosure;

Fig. 2 is a flowchart depicting an exemplifying method performed by an ADS development system according to embodiments of the disclosure;

Fig. 3 illustrates in an exemplifying manner incremental improvements to an allowed ADS safe driving behaviour according to embodiments of the disclosure; and

Fig. 4 illustrates in an exemplifying manner exemplifying probability density function values according to embodiments of the disclosure.

DETAILED DESCRIPTION

Non-limiting embodiments of the present disclosure will now be described more fully hereinafter with reference to the accompanying drawings, in which currently preferred embodiments of the disclosure are shown. This disclosure may, however, be embodied in many different forms and should not be construed as limited to the embodiments set forth herein. Like reference characters refer to like elements throughout. Dashed lines of some boxes in the figures indicate that these units or actions are optional and not mandatory.

In the following, according to embodiments herein which relate to supporting proving fulfilment of safety requirements imposed on ADSs, there will be disclosed an approach enabling improved and/or optimized performance growth and/or development gain - such as incremental improvements - of an ADS.

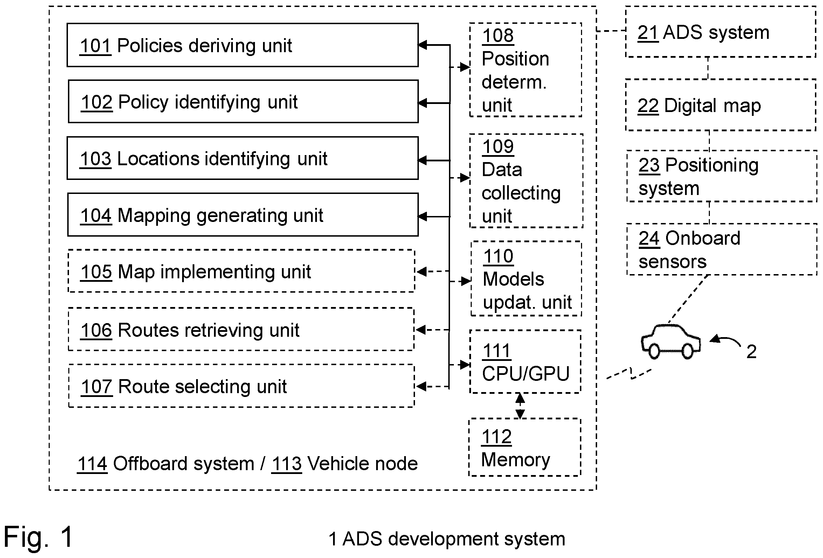

Referring now to the figures, there is depicted in **Fig. 1** a schematic block diagram of an exemplifying **ADS development system 1** according to embodiments of the disclosure. The ADS development system 1 is adapted for supporting proving fulfilment of safety requirements imposed on ADSs. The ADSs may be represented by any arbitrary ADAS or AD systems e.g. known in the art and/or yet to be developed. The safety requirements imposed on the ADSs, on the other hand, may be represented by any feasible - e.g. known - safety claims, and further comprise any number and/or combination thereof, e.g. as known in the art.

The phrase "ADS development system" may refer to "ADS development supporting system", "ADS supporting system" and/or "locations mapping system", and according to an example further to "route influencing system". "Method performed by an ADS development system", on the other hand, may refer to "at least partly computer-implemented method performed by an ADS development system". Moreover, the phrase "for supporting proving fulfillment of safety requirements" may refer to "for supporting providing evidence for fulfillment of safety requirements" and/or "for supporting proving fulfillment of predeterminable, set and/or derived safety requirements", whereas "safety requirements imposed on ADSs" may refer to "safety requirements dictated for and/or bound upon ADSs". Furthermore, "for supporting proving fulfillment of safety requirements imposed on ADSs" may refer to "for supporting development of ADSs", and according to an example further to "for supporting adaptive, selective and/or directed field data and/or operational data targeting and/or collection by ADSs".

As illustrated in an exemplifying manner in exemplifying Fig. 1, the ADS development system 1 is - e.g. by means of a **policies deriving unit 101** - adapted and/or configured for deriving based on the safety requirements and predeterminable models for a set of operational parameters of an **ADS 21**, a corresponding set of parameter-specific ADS safe driving policies, each safe driving policy exhibiting a respective uncertainty inflicted by an uncertainty of the corresponding operational parameter. Thereby, there is obtained and/or calculated from modelling framework(s) for the ADS 21, one or more safe driving policies - such as safe driving speeds - each restricted by a respective differing operational parameter - such as event rate and/or probability of sensor failure - which safe driving policies each are inflicted with a respective uncertainty inherited from an uncertainty of the corresponding restricting operational parameter. Accordingly, there may be modelled respective operational parameter's influence on the ADS's 21 safe driving behaviour - subsequently its performance - as restricted by the safety requirements imposed on the ADS 21, where for instance the safe driving behaviour by which the ADS 21 currently is allowed to be manoeuvred may be dictated e.g. by the strictest of the derived safe driving behaviours, such as by the lowest of derived safe driving speeds. In other words, given a methodology or system for deriving a safe driving policy given a set of safety requirements and estimations of operational parameters - such as event exposure, system error rates, emergency capabilities, etc. - e.g. as known in the art, it is possible to derive the currently allowed optimal performance policy that fulfil the safety requirements of the ADS 21. It is further possible to derive the impact from changes to each estimated operational parameter - e.g. represented by incremental improvements - considering increased knowledge of such parameters. This is illustrated in exemplifying **Fig. 3**, depicting in an exemplifying manner incremental improvements to an allowed ADS safe driving behaviour - here safe speed - when accounting for updated estimates of - here - perception error rates and event exposure rates. Accordingly, operational parameters influencing the ADS performance, and the effort to improve each respective parameter estimation, may be derived from the predeterminable models - e.g. rate estimation models - and/or modelling framework(s).

The ADS 21 may be represented by any arbitrary ADAS or AD systems e.g. known in the art and/or yet to be developed. The ADS 21 may further be integrated - and/or planned and/or compatible to be integrated - into vehicles, such as an **ADS-equipped vehicle 2** exemplified in Fig. 1. The ADS-equipped vehicle 2 - which may be referred to as host vehicle or ego-vehicle - may be represented by any arbitrary - e.g. known - manned or unmanned vehicle, for instance an engine-propelled or electrically-powered vehicle such as a car, truck, lorry, van, bus and/or tractor. Moreover, the term "vehicle" may refer to "autonomous and/or at least partly autonomous vehicle", "driverless and/or at least partly driverless vehicle", and/or "self-driving and/or at least partly self-driving vehicle", and according to an example further to "production vehicle", "fleet vehicle", "launched vehicle", "road-traffic vehicle" and/or "public road vehicle".

Moreover, the predeterminable models may be represented by any feasible - e.g. known - one or more assumption models and/or modelling framework(s) describing and modelling different elements of an ADS 21 and its operational context - thus operational parameters - taking into consideration the safety requirements bound upon the ADS 21. Said models may accordingly for instance be represented by and/or comprise models of event exposure, sensing and perception models, actuation and closed-loop behaviour representations, etc. The predeterminable models may for instance reside in a **vehicle node 113** of a vehicle such as the exemplifying ADS-equipped vehicle 2 depicted in Fig. 1, and/or reside in a **system 114** offboard a vehicle, such as a backend system and/or centralized system, e.g. on one or more servers. The set of operational parameters, on the other hand, may be represented by any feasible - e.g. known - one or more operational parameters of the ADS 21, such as e.g. event rates, probability of sensor failure, available braking, etc. Moreover, the corresponding set of parameter-specific ADS safe driving policies derived based on the safety requirements and the predeterminable models, may be represented by any feasible - e.g. known - one or more respective safe driving policy, each restricted by, governed by and/or related to a respective operational parameter of the ADS 21. An ADS safe driving policy as disclosed herein may thus for instance be represented by a safe driving speed. Other examples may include a safe positioning e.g. positioning of an ADS-equipped vehicle further away from e.g. a right lane in certain high exposure areas, safe gap distance to other vehicles, maximum steering rate, etc. Moreover, respective uncertainty inflicted on each safe driving policy by an uncertainty of the operational parameter restricting that specific safe driving policy, may - e.g. as known - be represented by any feasible uncertainty, which further for instance may decrease upon more operational data involving the corresponding operational parameter being collected and/or e.g. the uncertainty associated therewith being proven. According to an example, an event may be represented by adverse weather, dynamic traffic flow, cut-in frequency e.g. in congestion, etc.

The phrase "deriving based on said safety requirements and predeterminable models" may refer to "obtaining, calculating and/or determining based on said safety requirements and predeterminable models", "deriving based on said safety requirements and predeterminable models" and/or "deriving based on a modelling framework comprising and/or taking into consideration said safety requirements and predeterminable models", whereas "predeterminable models" may refer to "obtained and/or predetermined models", "predeterminable assumption models" and/or "predeterminable operational parameters models". Moreover, "deriving [...] for a set of operational parameters of an ADS" may refer to "deriving [...] for operational parameters of an ADS" and/or "deriving [...] for a set of operational parameters of an ADS and its operational environment". The phrase "a corresponding set of parameter-specific ADS safe driving policies", on the other hand, may refer to "a corresponding set of uncertainty-bound parameter-specific ADS safe driving policies", "a set of parameter-specific ADS safe driving policies" and/or "a respective corresponding parameter-specific ADS safe driving policy", whereas "policies" may refer to "behaviours" and according to an example further to "speeds". It may be noted that a "set" may comprise one or more policies. Furthermore, "parameter-specific ADS safe driving policies" may refer to "parameter-dependent ADS safe driving policies" and/or "ADS safe driving policies each restricted by a respective operational parameter". Moreover, "each safe driving policy exhibiting a respective uncertainty" may refer to "each safe driving policy being imposed with, associated with, carrying and/or demonstrating a respective uncertainty", whereas "respective uncertainty inflicted by an uncertainty of the corresponding operational parameter" may refer to "respective uncertainty inherited from, stemming from, derived from and/or imposed by an uncertainty of the corresponding operational parameter". According to an example, the phrase "deriving [...] a corresponding set of parameter-specific ADS safe driving policies [...]" may refer to "deriving [...] a corresponding set of parameter-specific ADS safe driving speeds [...], wherein a currently allowed, limiting, restricting and/or dominating ADS safe driving policy for the ADS fulfilling said safety requirements, is dictated by the strictest, most limiting and/or most restricting of the parameter-specific ADS safe driving behaviours" and/or "deriving [...] a corresponding set of parameter-specific ADS safe driving speeds [...], wherein a currently allowed, limiting, restricting and/or dominating ADS safe driving speed for the ADS fulfilling said parameter-specific ADS safety requirements, is dictated by the lowest of the safe driving speeds".

As illustrated in an exemplifying manner in exemplifying Fig. 1, the ADS development system 1 is further - e.g. by means of a **policy identifying unit 102** - adapted and/or configured for identifying at least a first parameter-specific ADS safe driving policy inflicted with an uncertainty fulfilling predeterminable criteria, said criteria filtering out uncertainties indicating, respectively, that the corresponding operational parameter needs to be further observed in order to relax the ADS's 21 currently allowed safety requirements-fulfilled ADS safe driving policy. Thereby, there may be found one or more of the operational parameters limiting - and/or next in line to be limiting - the performance of the ADS 21. Accordingly, at least a first parameter-specific ADS safe driving policy deemed relevant for further observance, may be selected and/or pinpointed out of the derived set of parameter-specific ADS safe driving policies. Thus, by evaluating and/or assessing the - by respective operational parameters restricted - ADS safe driving policies and their respective inflicted uncertainties, it may be filtered out the ADS safe driving policies with their respective uncertainties - and subsequently the operational parameters - that affect the ADS's safe driving behaviour - and thus performance - to great and/or greatest extent. Accordingly, it may be identified what data - i.e. where additional data - would have great and/or the most impact on the ADS's 21 performance. In other words, it may be analyzed and subsequently filtered out the operational parameter(s) currently limiting and/or next of limiting the performance of the ADS 21, for which further knowledge and estimates would and/or could have a high potential to improve ADS efficiency, e.g. by being relaxed the most by gathering of more data. Expressed differently, there may first be identified a set of parameters that are safe since they are conservatively selected with respect to uncertainties, upon which there is then analyzed which parameters are limiting to the ADS 21 and also have large uncertainties associated, which indicates that more evidence may make the ADS 21 more efficient. When using operational data and estimating e.g. rates thereof, it is further possible to derive the amounts of data required to achieve the desired impact on the e.g. rate estimates. Thus, in addition to having the influencing factors on the - e.g. safe - performance of the ADS 21, there may also be derived the efforts needed to reach the next performance increase and/or jump - such as an incremental improvement as illustrated in an exemplifying manner in Fig. 3 - which the predeterminable criteria potentially additionally may take into consideration.

The predeterminable criteria may be represented by any feasible conditions and/or thresholds, e.g. filtering out one or more or a combination of parameter-specific ADS safe driving policies, e.g. having the highest - and/or second, third etc. highest - uncertainty or uncertainties, and/or to greatest extent - and/or second, third etc. greatest extent - limiting the safe driving behaviour, e.g. safe speed, by which the ADS 21 is allowed to be manoeuvred while still fulfilling the safety requirements..

The phrase "identifying at least a first parameter-specific ADS safe driving policy" may refer to "selecting, prioritizing, pinpointing and/or filtering out at least a first parameter-specific ADS safe driving policy", whereas "parameter-specific ADS safe driving policy inflicted with an uncertainty fulfilling predeterminable criteria" may refer to "parameter-specific ADS safe driving policy associated with, attributed with and/or having an uncertainty fulfilling predeterminable criteria". Moreover, "fulfilling predeterminable criteria" may refer to "fulfilling predeterminable criteria stipulating conditions in view of the inflicted uncertainties of the parameter-specific ADS safe driving policies". Furthermore, "criteria" may refer to "dynamic criteria", "uncertainty criteria" and/or "limitation criteria", whereas "said criteria filtering out uncertainties" may refer to "said criteria stipulating and/or comprising conditions filtering out uncertainties". The phrase "filtering out uncertainties", on the other hand, may refer to "selecting, pinpointing and/or identifying uncertainties", "filtering out parameter-specific ADS safe driving policies" and/or "filtering out uncertainties of the parameter-specific ADS safe driving policies", whereas "uncertainties indicating" may refer to "uncertainties revealing and/or signalling", "uncertainties for" and/or "uncertainties having". Moreover, "the corresponding operational parameter" may refer to "its corresponding operational parameter", whereas "needs to be further observed" may refer to "is deemed, determined, identified and/or considered to need to be further observed", "needs to be subjected to further observance" and/or "requires and/or benefits from further observance". According to an example ""needs to be further observed" may refer to "needs - and/or is next in line to need - to be further observed". The phrase "in order to relax the ADS's currently allowed safety requirements-fulfilled ADS safe driving policy", on the other hand, may refer to "in order to relax the ADS's currently allowed ADS safe driving policy fulfilling said safety requirements" and/or "in order to relax limitation(s) on, and/or reach an increase and/or improvement for, the ADS's performance while fulfilling said safety requirements", and according to an example further to "in order to lower that parameter's - and subsequently its corresponding parameter-specific ADS driving policy's - uncertainty".

As illustrated in an exemplifying manner in exemplifying Fig. 1, the ADS development system 1 is further - e.g. by means of a **locations identifying unit 103** - adapted and/or configured for identifying at least a first geographical location, e.g. of an ADS-compliant digital map, exhibiting conditions allowing the operational parameter(s) in need of further observance, to be observed. Thereby, there is found locations such as regions, road sections, road scenarios, stationary traffic environments, etc. - such as of, in and/or derived from a high definition, HD, and/or standard definition, SD, map and/or such as associated with geographical coordinates and/or a geographical area - having characteristics, properties and/or attributes supporting the operational parameter(s) specific to the parameter-specific ADS safe driving policy or policies fulfilling the uncertainty conditions, to be observable or at least potentially observable. Accordingly, there may be pinpointed locations enabling operational parameters - such as e.g. event rate and/or probability of sensor failure - identified to be needing further observing in order to relax the ADS's 21 currently allowed safety requirements-fulfilled ADS safe driving policy, to be observed, potentially under temporal constraints such as e.g. during a certain time of day etc.

The geographical locations may for instance be identified in any feasible one or more digital maps, such as in an ADS-compliant, ADS-intended and/or ADS-supporting digital map, and/or identified based on geographical coordinates e.g. GPS coordinates and/or geographical area, and further for instance offboard an ADS-equipped vehicle, such as in the optional offboard system 114. According to an example, a "map" may be considered a subset of an Operational Design Domain, ODD. Moreover, the geographical locations may be represented by any applicable regions and/or stretches of road of any arbitrary feasible sizes and/or dimensions, located in any feasible geographical part(s) of the world. The number of identified locations may further be of any arbitrary magnitude, and for instance range from a single location up to tens, hundreds or even thousands or more thereof. Furthermore, geographical location(s) exhibiting conditions - such as e.g. speed limit, type of road, lanes and/or lane marking, curvature and/or banking, etc. - allowing the operational parameter corresponding to the identified at least first parameter-specific ADS safe driving policy, to be observed, may be identified in any feasible manner, such as through comparison and/or assessment of locations conditions in view of operational parameters. Mapping of which operational parameters may be observable at which geographical locations, may take place or have taken place at any arbitrary point in time, such as prematurely or in real-time. Additionally or alternatively, such mapping and/or the identifying of locations may for instance be accomplished utilizing algorithms, and/or with support from e.g. machine learning. Potentially, the geographical location(s) exhibiting conditions allowing the operational parameter(s) in need of further observance to be observed, may additionally be associated with one or more temporal constraints, such as only exhibiting said conditions at certain time interval(s), period(s) of time, and/or time instant(s), etc.

The phrase "identifying at least a first geographical location" may refer to "finding, extracting and/or determining at least a first geographical location", and according to an example further to "identifying at least a first geographical location in, associated with and/or of an ADS-compliant, ADS-intended and/or ADS-supporting digital map" and/or "identifying at least a first geographical location for a predeterminable geographical area". Moreover, "at least a first geographical location exhibiting conditions" may refer to "at least a first geographical location deemed and/or determined exhibiting conditions", "at least a first geographical location having, comprising and/or attributed with conditions" and/or "at least a first geographical location exhibiting characteristics and/or circumstances", and according to an example further to "at least a first geographical location exhibiting road characteristics, properties, structures, topologies, features and/or geometries, etc.". The phrase "exhibiting conditions allowing the operational parameter(s) in need of further observance, to be observed", on the other hand, may refer to "exhibiting conditions allowing the identified operational parameter(s) in need of further observance, to be observed", "exhibiting conditions allowing the operational parameter or parameters in need of further observance, to be observed", "exhibiting conditions allowing the operational parameter corresponding to the identified at least first parameter-specific ADS safe driving policy, to be observed", "exhibiting conditions allowing the operational parameter(s) in need of collected operational data, to be observed", "exhibiting conditions supporting and/or enabling - and/or providing circumstances supporting and/or enabling - the operational parameter(s) in need of further observance, to be observed" and/or "associated with the operational parameter(s) in need of further observance" and/or "prematurely and/or already associated with the operational parameter(s) in need of further observance". Furthermore, "in need of further observance" may throughout refer to "in need of further observation". Moreover, "to be observed" may refer to "to potentially be observed", "to be expected to be observed" and/or "to be learned", and according to an example further to "to be observed, for supporting and/or enabling lowering of that parameter's - and subsequently its corresponding parameter-specific ADS driving policy's - uncertainty". According to an example, "identifying at least a first geographical location [...] exhibiting conditions allowing the operational parameter(s) in need of further observance, to be observed" may comprise "identifying at least a first geographical location [...] exhibiting conditions allowing the operational parameter(s) in need of further observance, to be observed, said at least first geographical location being associated with a temporal constraint of when said conditions are exhibited".

As illustrated in an exemplifying manner in exemplifying Fig. 1, the ADS development system 1 is further - e.g. by means of a **mapping generating unit 104** - adapted and/or configured for generating a mapping associating the identified at least first geographical location with the operational parameter(s) in need of further observance. Thereby, there is compiled and/or created a mapping - such as a heat map - which connects - e.g. attributes - the operational parameter(s) identified and/or determined to be needing further observance, to the geographical locations found to exhibit conditions allowing said operational parameter(s), to be observed. Accordingly, in the mapping there is included - attributed with respective relevant operational parameter(s) - corresponding geographical location(s) identified as being relevant for subjecting and/or exposing a potential ADS-equipped vehicle at said location(s), to the corresponding operational parameter(s). Thus, there is provided a mapping such as a heat map, pointing out locations which may represent situations where the identified operational parameter(s) may be experienced and/or observed, potentially under temporal constraints such as e.g. during a certain time of day etc. Thus, targeted data collection may be supported, enabling subsequent fleet testing and/or data collection to be targeted to locations where knowledge and estimates of said operational parameters would have a high potential to improve ADS efficiency and have a high potential to be possible to measure. In other words, according to the introduced concept, there is supported - and subsequently enabled - improved and/or optimized data collection, and consequently, supported - and subsequently enabled - continuous, improved and/or optimized performance growth of an ADS, with the additional benefit of lowered time-to-market and/or development costs.

The mapping - which may cover any feasible geographical part of the world - may comprise any feasible number of identified geographical locations - for instance range from a single geographical location up to tens, hundreds or thousands or even more thereof - and further pertain to any feasible number of identified operational parameters, such as to a single operational parameter, or range up to tens, hundreds or thousands or even more thereof. According to an example, "mapping" may imply looking inside the Operational Design Domain, ODD. Said mapping may further take on any feasible format, e.g. digital format, for instance be captured in e.g. a matrix and/or table, and/or for instance - as touched upon in the foregoing - be represented by and/or comprising a heat map. That is, optionally, generating a mapping may comprise - and/or the mapping generating unit 104 may be adapted and/or configured for - generating a heat map in which the identified at least first geographical location is attributed with the operational parameter(s) in need of further observance. Thereby, the heat map may reflect a virtual geographical map to which the identified geographical location(s) are mapped, respectively attributed with - at least - the corresponding operational parameter(s).

The phrase "generating a mapping" may refer to "compiling, creating and/or constructing a mapping", "generating a digital mapping" and/or "generating a connection and/or association", and according to an example further to "generating a heat map". Moreover, "a mapping associating the identified at least first geographical location with the operational parameter(s) in need of further observance" may refer to "a mapping attributing, attaching, connecting, combining and/or mapping the identified at least first geographical location with the operational parameter(s) in need of further observance".

Optionally, and as illustrated in an exemplifying manner in exemplifying Fig. 1, the ADS development system 1 may further - e.g. by means of an optional map implementing unit 105 - be adapted and/or configured for implementing the mapping in a digital map 22 accessible from an ADS-equipped vehicle 2. Thereby, the generated mapping - e.g. heat map - may be utilized in an ADS-equipped vehicle 2, for instance in real-time. Subsequently, the mapping may provide input and/or form basis in view of planning of collecting field data and/or operational data involving - or potentially involving - the operational parameter(s) in need of further observance. The mapping may be implemented in the digital map 22 in any feasible manner, such as for instance embedded in a layer thereof. Moreover, the digital map 22 may be represented by any feasible at least first digital map 22, such as e.g. an HD map or SD map, or an equivalent or successor thereof, and further for instance be provided onboard the ADS-equipped vehicle 2 and/or in at least a first remotely accessible server. The digital map 22 may potentially, according to an example, be represented by the previously discussed digital map. The phrase "implementing said mapping in a digital map accessible from an ADS-equipped vehicle" may refer to "embedding and/or incorporating said mapping in a digital map accessible from an ADS-equipped vehicle" and/or "implementing said mapping in a digital map accessible by an ADS-equipped vehicle", and according to an example further to "implementing said mapping in a layer of a digital map accessible from an ADS-equipped vehicle" and/or "implementing said mapping in a digital map onboard an ADS-equipped vehicle".

Further optionally, as illustrated in an exemplifying manner in exemplifying Fig. 1, the ADS development system 1 may further - e.g. by means of an optional **routes retrieving unit 106** - be adapted and/or configured for retrieving one or more potential vehicle routes for the ADS-equipped vehicle 2. The ADS development system 1 may then further - e.g. by means of an optional **route selecting unit 107** - be adapted and/or configured for selecting a route out of said potential vehicle routes, comprising one or more of the at least first geographical location. Thereby, there is derived one or more viable routes between two geographical places, such as between an origin and a destination, relevant and/or applicable for the ADS-equipped vehicle 2 to potentially travel. Furthermore, thereby, there may be chosen - for instance based on respective identified geographical location(s)' conditions - a route which to great and/or to greatest extent exposes the ADS 21 to one or more identified geographical locations in a manner deemed favourable, relevant and/or preferred. Accordingly, data collection may be guided towards regions - or operational conditions - where the increased performance of subsequent ADS releases are expected to improve to great extent or to the most. Consequently, in favouring routes over one another based on the identified geographical locations situated along respective routes, a route may be selected which is likely to - and/or most likely to - expose the ADS 21 to relevant scenarios and/or situations in view of the operational parameter(s) in need of further observance. For instance, a route may be favoured comprising the greatest number of identified geographical locations. Additionally or alternatively, a route may be selected comprising the greatest number of identified geographical locations exhibiting conditions allowing the most limiting operational parameter(s) to be observed. Furthermore, additionally or alternatively, a route may be selected comprising identified geographical locations respectively and/or combined exhibiting conditions allowing a - e.g. predeterminable - constellation of e.g. the most, second most and/or third most etc. limiting operational parameter(s) to be observed, to thereby enable improving more than one operational parameter at the one and same geographical location and/or along the one and same route. Accordingly, optional predeterminable route selection criteria may thus be drawn up, selecting a route considered to have great and/or the most impact on the ADS's 21 performance.

The one or more vehicle routes may be represented by any arbitrary feasible number of routes, e.g. ranging from a single route up to several of even tens of routes or more. Moreover, the geographical places - such as the origin and destination - between which the one or more potential vehicle routes stretches, may be and/or have been selected in any arbitrary feasible manner, such as by an operator - e.g. occupant - of the ADS-equipped vehicle 2 and/or by e.g. the ADS 21. Further, retrieving the one or more potential vehicle routes may be accomplished in any arbitrary feasible - e.g. known - manner, such as from and/or with support from one or more of e.g. a navigation system (not shown), route planning system (not shown), the ADS 21, etc. The potential vehicle route(s) may be - and/or have been - calculated, proposed and/or determined in any feasible manner, such as taking into consideration constraints such as arrival time, fuel consumption, traffic situation etc., and potentially further taking into consideration the identified geographical location(s).

The phrase "retrieving one or more potential vehicle routes" may refer to "deriving, obtaining and/or determining one or more potential vehicle routes", "retrieving one or more potential vehicle routes relevant and/or applicable", and according to an example further to "retrieving one or more potential vehicle routes between a selected first geographical place and a selected second geographical place". Furthermore, "potential vehicle routes" may refer to "viable, favourable, suggested, possible and/or feasible vehicle routes", whereas "vehicle routes" may refer to "traveling routes" and/or merely "routes". According to a further example, "retrieving one or more potential vehicle routes" may refer to "retrieving a vehicle origin and a vehicle destination". Moreover, the phrase "selecting a route" may refer to "favoring and/or prioritizing a route", "selecting a route deemed and/or considered favourable, rewarding, preferred and/or relevant for said ADS-quipped vehicle to travel", "determining a preferred route" and/or "selecting at least one route", whereas "comprising one or more of said at least first geographical location" may refer to "in consideration of and/or based on one or more of said at least first geographical location". Furthermore, according to an example, "selecting a route out of said potential vehicle routes, comprising one or more of said at least first geographical location" may refer to "selecting a route out of said potential vehicle routes, comprising one or more of said at least first geographical location, the selected route's geographical locations fulfilling predeterminable route selection criteria".

The following actions optionally performed by the ADS development system 1, may be carried out for instance as the ADS-equipped vehicle 2 is travelling. Thus, optionally, as illustrated in an exemplifying manner in exemplifying Fig. 1, the ADS development system 1 may further - e.g. by means of an optional **position determining unit 108** - be adapted and/or configured for determining with support from a **positioning system 23**, a geographical position of the ADS-equipped vehicle 21 along said selected route. The ADS development system 1 may then further - e.g. by means of an optional **data collecting unit 109** - be adapted and/or configured for collecting operational data when the vehicle position is within a predeterminable distance of and/or time range from respective one or more of the at least first geographical location. Thereby, by gathering operational data when the ADS-equipped vehicle 2 is at - and/or in vicinity of - respective identified geographical location along the selected route, where the ADS-equipped vehicle 2 is exposed to - or has a high probability of being exposed to - observing the operational parameter(s) in need of further observance, targeted, directed and/or selective data collection may be effected and/or realized. Accordingly, data collection may be activated in regions - or under operational conditions - where the increased performance of subsequent ADS releases are expected to improve to great extent, or to the most.

According to an example, for instance considering a scenario where there is no selected route involved, the ADS development system 1 may based on an ADS-equipped vehicle's geographical position - e.g. determined with support from a positioning system 23 - determine that said vehicle is in vicinity of one of the at least first geographical location, and subsequently collect operational data when the vehicle position is within a predeterminable distance of and/or time range from said one of the at least first geographical location. Thereby, by an ADS-equipped vehicle gathering operational data when at - and/or in vicinity of - one or more of the identified geographical location(s), where the ADS-equipped vehicle 2 is exposed to - or has a high probability of being exposed to - observing the operational parameter(s) in need of further observance, targeted, directed and/or selective data collection may be effected and/or realized. Accordingly, data collection may be activated in regions - or under operational conditions - where the increased performance of subsequent ADS releases are expected to improve to great extent, or to the most

The operational data may be represented by any feasible data relevant for the ADS 21 and/or the operational parameter(s) in need of further observance. The operational data may thus comprise e.g. raw data, object-level data, ADS-related status and/or state data - e.g. associated with and/or from **onboard sensors 24,** buses, and/or application interfaces etc. - and/or essentially entire and/or all data in the ADS-equipped vehicle 2 - pertinent near the identified geographical location(s). The operational data may for instance comprise data indicative of current sensory information, such as e.g. from surrounding detecting sensors, brake sensor(s), and/or malfunction sensor(s), etc. Such sensor data and/or the operational data may e.g. be obtained in any feasible - e.g. known - manner, such as continuously and/or intermittently, and further be obtained e.g. while the ADS-equipped vehicle 2 is travelling and/or while standing still. Moreover, the operational data may be of any feasible - e.g. known - format, and further the extent of operational data collected be of any feasible magnitude.

The positioning system 23 may be represented by any arbitrary - e.g. known - system(s), sensor(s) and/or algorithm(s) supporting geographical positioning of the ADS-equipped vehicle 2, e.g. involving GNSS such as GPS, and/or involving a digital map such as the previously discussed digital map 22. The predeterminable distance and/or time range from the respective one or more of the at least first geographical locations within which operational data is to be collected, on the other hand, may be of any feasible magnitude, for instance ranging from a few meters up to hundreds or even thousands of meters, and/or ranging from less than a second up to several seconds or even tens of seconds or more. The phrase "determining [...] a geographical position" may refer to "determining [...] a current and/or essentially current geographical position" and/or "estimating [...] a geographical position", whereas "with support from a positioning system" may refer to "with support from a positioning system comprised in and/or onboard said vehicle". Moreover, "determining [...] a geographical position of said ADS-equipped vehicle along the selected route" may refer to merely "determining [...] a geographical position". The phrase "collecting operational data", on the other hand, may refer to "gathering and/or storing operational data", "collecting field data", "capturing and/or deriving operational data" and/or "collecting onboard said ADS-equipped vehicle operational data". Furthermore, "when the vehicle position is within a predeterminable distance of and/or time range" may refer to "provided that said vehicle position is within a predeterminable distance of and/or time range".

Further optionally, as illustrated in an exemplifying manner in exemplifying Fig. 1, the ADS development system 1 may further - e.g. by means of an optional **models updating unit 110** - be adapted and/or configured for updating the models with at least a portion of the collected data. Thereby, the predeterminable models - such as models of event exposure, sensing and perception models, actuation and closed-loop behaviour-describing and modelling different elements of an ADS 21 and its operational context, may be updated based on the gathered operational data. Accordingly, the increased knowledge - such as a lowered uncertainty - of the operational parameter(s) covered by the collected data, may assist in accomplishing incremental improvements to an allowed ADS safe driving behaviour, e.g. safe speed as depicted in an exemplifying manner in Fig. 3.Thus, according to an example, a new policy may be identified that, given the reduced uncertainties, fulfil the safety requirements. Updating of the models may take place at any feasible location, such as onboard the ADS-equipped vehicle 2 and/or offboard the vehicle 2 such as in the previously discussed offboard system 114, and updating the models may thus potentially comprise providing - such as transferring - the collected data to where the models reside, prior to said updating. In other words, there is supported both manual and/or automatic driving policy updates offboard 2 - as well as onboard - the ADS-equipped vehicle 2..Moreover, "updating said models" may refer to "updating at least a portion of said models".

As further shown in Fig. 1, the ADS development system 1 comprises a policies deriving unit 101, a policy identifying unit 102, a locations identifying unit 103, a mapping generating unit 104, an optional map implementing unit 105, an optional routes retrieving unit 106, an optional route selecting unit 107, an optional position determining unit 108, an optional data collecting unit 109 and an optional models updating unit 110, all of which already have been described in greater detail above. Furthermore, the embodiments herein for supporting proving fulfilment of safety requirements imposed on ADSs, may be implemented through one or more processors, such as a **processor 111,** for instance represented by at least a first Central Processing Unit, CPU, at least a first Graphics Processing Unit, GPU, at least a first Tensor Processing Unit, TPU, and/or at least a first Field-Programmable Gate Array, FPGA, together with computer program code for performing the functions and actions of the embodiments herein. Said program code may also be provided as a computer program product, for instance in the form of a data carrier carrying computer program code for performing the embodiments herein when being loaded into the ADS development system 1. One such carrier may be in the form of a CD/DVD ROM disc and/or a hard drive, it is however feasible with other data carriers. The computer program code may furthermore be provided as pure program code on a server and downloaded to the ADS development system 1. The ADS development system 1 may further comprise a **memory 112** comprising one or more memory units. The memory 112 optionally includes high-speed random access memory, such as DRAM, SRAM, DDR RAM, or other random access solid-state memory devices, and further optionally includes non-volatile memory, such as one or more magnetic disk storage devices, optical disk storage devices, flash memory devices, or other non-volatile solid-state storage devices. Moreover, the memory 112 may be arranged to be used to store e.g. information, and further to store data, configurations, scheduling, and applications, to perform the methods herein when being executed in the ADS development system 1. For instance, the computer program code may be implemented in the firmware, stored in FLASH memory 112, of an embedded processor 111, and/or downloaded wirelessly e.g. from an off-board server. Furthermore, units 101-110, the optional processor 111 and/or the optional memory 112, may at least partly be comprised in one or more **systems 114** offboard the ADS-equipped vehicle 2 for instance represented by a backend system and/or centralized system, and/or comprised in one or more **nodes 113** e.g. ECUs of the ADS-equipped vehicle 2 e.g. in and/or in association with the ADS 21. It should thus be understood that parts of the described solution potentially may be implemented in a system 114 located external vehicles, or in a combination of internal and external vehicles, such as in a distributed system and/or solution, for instance further in a so-called cloud solution. Those skilled in the art will also appreciate that said units 101-110 described above as well as any other unit, interface, system, controller, module, device, element, feature, or the like described herein may refer to, comprise, include, and/or be implemented in or by a combination of analog and digital circuits, and/or one or more processors configured with software and/or firmware, e.g. stored in a memory such as the memory 112, that when executed by the one or more processors such as the processor 111 perform as described herein. One or more of these processors, as well as the other digital hardware, may be included in a single Application-Specific Integrated Circuitry, ASIC, or several processors and various digital hardware may be distributed among several separate components, whether individually packaged or assembled into a System-on-a-Chip, SoC.

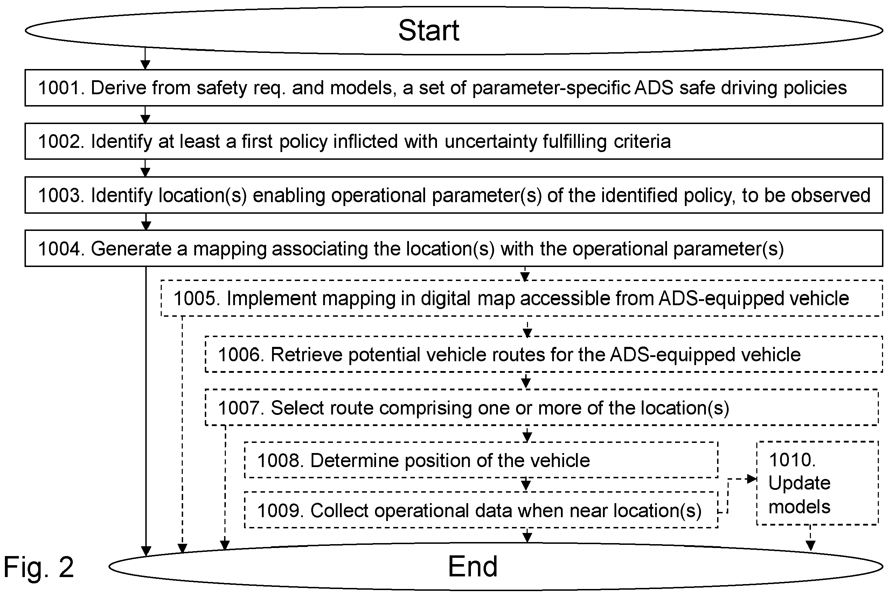

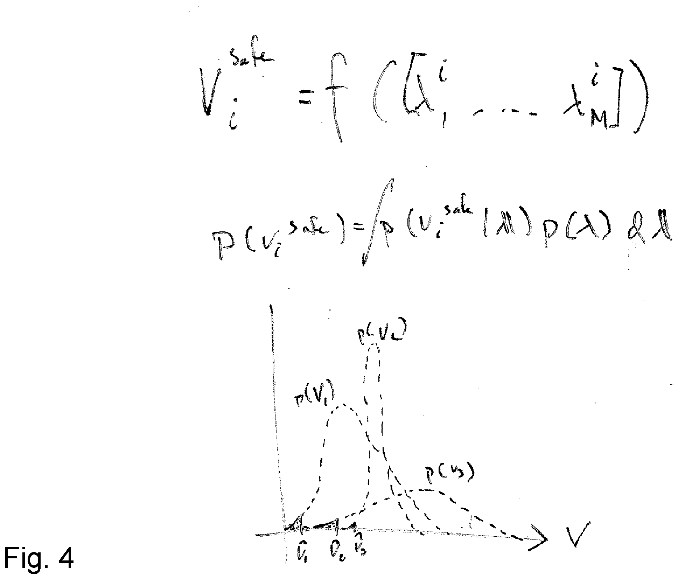

**Fig. 2** is a flowchart depicting an exemplifying method performed by an ADS development system 1 according to embodiments of the disclosure. Said method is for supporting proving fulfilment of safety requirements imposed on ADSs. The exemplifying method, which may be continuously repeated, comprises one or more of the following actions discussed with support from Fig. 1, and to some extent Figs. 3 and 4. Moreover, the actions may be taken in any suitable order and/or one or more actions may be performed simultaneously and/or in alternate order where applicable.

**Action 1001**

In Action 1001, the ADS development system 1 derives - e.g. with support from the policies deriving unit 101 - based on said safety requirements and predeterminable models for a set of operational parameters of an ADS 21, a corresponding set of parameter-specific ADS safe driving policies, each safe driving policy exhibiting a respective uncertainty inflicted by an uncertainty of the corresponding operational parameter.

**Action 1002**

In Action 1002, the ADS development system 1 identifies - e.g. with support from the policy identifying unit 102 - at least a first parameter-specific ADS safe driving policy inflicted with an uncertainty fulfilling predeterminable criteria, which criteria filters out uncertainties indicating, respectively, that the corresponding operational parameter needs to be further observed in order to relax the ADS's 21 currently allowed safety requirements-fulfilled ADS safe driving policy.

**Action 1003**

In Action 1003, the ADS development system 1 identifies - e.g. with support from the locations identifying unit 103 - at least a first geographical location, e.g. of an ADS-compliant digital map, exhibiting conditions allowing the operational parameter(s) in need of further observance, to be observed.

**Action 1004**

In Action 1004, the ADS development system 1 generates - e.g. with support from the mapping generating unit 104 - a mapping associating the identified at least first geographical location with the operational parameter(s) in need of further observance.

Optionally, Action 1004 of generating a mapping may comprise - and/or the mapping generating unit 104 may be adapted and/or configured for - generating a heat map in which the identified at least first geographical location is attributed with the operational parameter(s) in need of further observance.

**Action 1005**

In optional Action 1005, the ADS development system 1 may implement - e.g. with support from the optional map implementing unit 105 - said mapping in a digital map 22 accessible from an ADS-equipped vehicle 2.

**Action 1006**

In optional Action 1006, the ADS development system 1 may retrieve - e.g. with support from the optional routes retrieving unit 106 - one or more potential vehicle routes for the ADS-equipped vehicle 2.

**Action 1007**

In optional Action 1007, which may follow upon optional Action 1006, the ADS development system 1 may select - e.g. with support from the optional route selecting unit 107 - a route out of the potential vehicle routes, comprising one or more of the at least first geographical location.

**Action 1008**

In optional Action 1008, the ADS development system 1 may determine - e.g. with support from the optional position determining unit 108 - with support from a positioning system 23, a geographical position of the ADS-equipped vehicle 2 along the selected route.

**Action 1009**

In optional Action 1009, which may follow upon optional Action 1008, the ADS development system 1 may collect - e.g. with support from the optional data collecting unit 109 - operational data when the vehicle position is within a predeterminable distance of and/or time range from respective one or more of the at least first geographical location.

**Action 1010**

In optional Action 1010, the ADS development system 1 may update - e.g. with support from the optional models updating unit 110 - the models with at least a portion of the collected data.

The concept introduced herein, i.e. the mapping - for instance represented by a heat map - may thus, as touched upon in the foregoing, for instance be utilized upon - and/or constitute a so-called ADS performance influence heat map when - performing route planning in view of optimizing performance growth of an ADS 21. According to an example, and as depicted in an exemplifying manner in conjunction with **Fig. 4**, an implementation and/or embodiment of the concept introduced herein may thus potentially be explained by, represented by - and/or be carried out - as follows.

In the example of Fig. 4, it is assumed that there has been designed an ADS, that it has been shown that the ADS is safe to use, and further that said ADS is in use. The ADS is by definition limited to doing precisely what it is shown to be capable of, i.e. the use-case, in the operational design domain, ODD, at hand. Furthermore, there is assumed that this ADS is designed to balance all safety-related risks at run-time such that it does not drive faster than what it knows it is capable of - just like humans do or should do. It may be noted that a limit based on knowing for sure that you cannot do something may influence the driving the same way as a limit based on not knowing a particular capability and therefore avoiding doing that; "better safe than sorry". The system can be characterized as being limited by a family of constraints that all need to be fulfilled. Furthermore, it is common to express these limits in terms of safe-speed, where the ADS safe speed at any time is equal to the lowest of the speeds that are safe with respect to a particular consequence that an ADS-equipped vehicle is designed to avoid:

$$SafeSpeed = MIN(SafeSpeed\_1, ..., SafeSpeed\_N),$$

 in an ADS where the run-time risk can be assessed as jointly avoiding 'N' consequences at the same time.

Each SafeSpeed_i , i \in 1... N, is calculated from a series of parameters and assumptions - i.e. models - that each needs to be proven to be representative for the ADS use-case in order for the ADS to be safe. If these parameters are uncertain, the safeSpeed will - as illustrated in exemplifying Fig. 4 - also be uncertain, This is not necessarily observable, but here, such a connection is established. Exemplifying Fig. 4 thus depicts exemplifying respective probability density function value (p(v1), p(v2), ...). It can be integrated over a range to express the probability that a random variable is in that range P(A< x<B) = int_(A)^(B) p(x)dx. The parameter vector \lambda contains all parameters that are used to calculate a safe speed and can include e.g. rates of occurrences of certain events, available braking, probability of sensing failure, etc. In exemplifying Fig. 4, it may be derived that v_2 can hardly be much improved, since the probability distribution is already quite narrow. This means that there is a good understanding of the actual limits and it follows that more information cannot be expected to change the safe speed to any larger extent. On the contrary, v_3 however is very uncertain and the belief about what is a safe value for "the speed is at least larger than this" - which in Fig. 4 is indicated by the point estimates ^v_1, ^v_2, ^v_3 - can be expected to change to great extent with more informative observations. Analysis may however show that it is v_1 that is in-fact currently limiting the system ( it may be noted that the graph here is valid for a point in time at run-time since there in-fact may be other limits to the speed as well, not included here; e.g. a leading vehicle driving slower that any limit v1, ..., v_N may naturally be normative when it comes to limiting speed). Hence it may be concluded that v_1 needs to be learned better. The analysis focuses on the vector \lambda since a similar view will show how much each element contributes to the overall safety. Once there has been identified what elements contribute, both for v_1 and v_3, there is a desire to learn more about these in the hopes that the resulting - thus updated - distributions will resemble p(v_2) but centered further to the right should the graph of exemplifying Fig. 4 be updated. In order to do so, it is desirable to know where to observe these elements. The modelling framework provides this information, contrary to if e.g. an AI would have been used to generate the driving policy in e.g. a black-box setting. For example, if it is important to know the max speed pedestrians can be expected to move with, then it is desirable to drive where pedestrians can be observed to great extent. Another example is to know how often e.g. a moose may step out onto the road, or alternatively, at which distance a moose will always be detected at, if on the road. The former moose-related rate may e.g. only be learned where intended to drive, but the latter could be learned on another road. Knowing this is of importance for designing future data gathering. Explicitly, routes taken by ADS-equipped vehicles in the future may e.g. be nudged using different incentives to drive in areas where these parameters can be learned. Learning where parameters are observable may potentially for some parameters be done in advance, using ADS-equipped vehicle or when applicable using even non-ADS vehicles. One such example for the latter case is the braking performance as a function of temperature, which could be learned using e.g. any cars. The connection to a geographic location could, taking one example, for instance be that if it is particularly interesting to know the performance during temperature changes around zero on the road surface, it could be desirable - and even planned - to drive on roads where there are many bridges, since temperature on a bridge can be different than on solid ground in cold weather. Moving along, the implementation and/or embodiment in conjunction with Fig. 4 is set out to predict the improvement and/or expected gain of an ADS after gathering data a given period of time, and identify which data has the potential to improve the ADS the most, and finally, identify where such data can be found. After these steps it can be estimated how much it is worth to do an update, and potentially select incentives for users of ADS-equipped vehicles to facilitate this happening. The above may thus be achieved by creating the connection between uncertainties in \lambda^i_J to the safe speeds v^safe_i to calculate the expected impact of a change, dv/d\lambda. It may be noted that this can lead to an understanding that multiple parameters are interesting to a varying degree. The expected impact may for instance be expressed as:

$$gain = g(driven\ kilometers,\ observation\ rate)$$

Then, g() may be used to determine which observation rate (of lambdas) that provides the maximum gain for the expected distance about to be undertaken. Next, there may be searched for routes where an ADS-equipped vehicle can drive, where the selected parameters are expected to be observed. Then, incentives may potentially be provided to drivers or ADS-schedulers to facilitate that driving.

It may be noted that it may be important that the data is collected using the most recently proven (or at least *previously* proven) system, with the purpose to show that a future version of the system will also be safe.

The person skilled in the art realizes that the present disclosure by no means is limited to the preferred embodiments described above. On the contrary, many modifications and variations are possible within the scope of the appended claims. It should furthermore be noted that the drawings not necessarily are to scale and the dimensions of certain features may have been exaggerated for the sake of clarity. Emphasis is instead placed upon illustrating the principle of the embodiments herein. Additionally, in the claims, the word "comprising" does not exclude other elements or steps, and the indefinite article "a" or "an" does not exclude a plurality.

**Claims**

1. A method performed by an ADS development system (1) for supporting proving fulfilment of safety requirements imposed on Automated Driving Systems, ADSs, said method comprising:

   *deriving* (1001) based on said safety requirements and predeterminable models for a set of operational parameters of an ADS (21), a corresponding set of parameter-specific ADS safe driving policies, each safe driving policy exhibiting a respective uncertainty inflicted by an uncertainty of the corresponding operational parameter;
   *identifying* (1002) at least a first parameter-specific ADS safe driving policy inflicted with an uncertainty fulfilling predeterminable criteria, said criteria filtering out uncertainties indicating, respectively, that the corresponding operational parameter needs to be further observed in order to relax the ADS's (21) currently allowed safety requirements-fulfilled ADS safe driving policy;
   *identifying* (1003) at least a first geographical location, e.g. of an ADS-compliant digital map, exhibiting conditions allowing the operational parameter(s) in need of further observance, to be observed; and
   *generating* (1004) a mapping associating the identified at least first geographical location with the operational parameter(s) in need of further observance.

2. The method according to claim 1, wherein said *generating* (1004) a mapping comprises generating a heat map in which the identified at least first geographical location is attributed with the operational parameter(s) in need of further observance.

3. The method according to claim 1 or 2, further comprising:
   *implementing* (1005) said mapping in a digital map (22) accessible from an ADS-equipped vehicle (2).

4. The method according to claim 3, further comprising:

   *retrieving* (1006) one or more potential vehicle routes for said ADS-equipped vehicle (2); and
   *selecting* (1007) a route out of said potential vehicle routes, comprising one or more of said at least first geographical location.

5. The method according to claim 4, further comprising:

   *determining* (1008) with support from a positioning system (23), a geographical position of said ADS-equipped vehicle (2) along the selected route; and
   *collecting* (1009) operational data when the vehicle position is within a predeterminable distance of and/or time range from respective one or more of the at least first geographical location.

6. The method according to claim 5, further comprising:
   *updating* (1010) said models with at least a portion of the collected data.

7. An **ADS development system** (1) for supporting proving fulfilment of safety requirements imposed on Automated Driving Systems, ADSs, said ADS development system (1) comprising:

   a **policies deriving unit** (101) for *deriving* (1001) based on said safety requirements and predeterminable models for a set of operational parameters of an ADS (21), a corresponding set of parameter-specific ADS safe driving policies, each safe driving policy exhibiting a respective uncertainty inflicted by an uncertainty of the corresponding operational parameter;

a **policy identifying unit** (102) for *identifying* (1002) at least a first parameter-specific ADS safe driving policy inflicted with an uncertainty fulfilling predeterminable criteria, said criteria filtering out uncertainties indicating, respectively, that the corresponding operational parameter needs to be further observed in order to relax the ADS's (21) currently allowed safety requirements-fulfilled ADS safe driving policy;

a **locations identifying unit** (103) for *identifying* (1003) at least a first geographical location, e.g. of an ADS-compliant digital map, exhibiting conditions allowing the operational parameter(s) in need of further observance, to be observed; and

a **mapping generating unit** (104) for *generating* (1004) a mapping associating the identified at least first geographical location with the operational parameter(s) in need of further observance.

8. The ADS development system (1) according to claim 7, wherein said mapping generating unit (104) is adapted and/or configured for generating a heat map in which the identified at least first geographical location is attributed with the operational parameter(s) in need of further observance.

9. The ADS development system (1) according to claim 7 or 8, further comprising:
a **map implementing unit** (105) for *implementing* (1005) said mapping in a digital map (22) accessible from an ADS-equipped vehicle (2).

10. The ADS development system (1) according to claim 9, further comprising:

a **routes retrieving unit** (106) for *retrieving* (1006) one or more potential vehicle routes for said ADS-equipped vehicle (2); and

a **route selecting unit** (107) for *selecting* (1007) a route out of said potential vehicle routes, comprising one or more of said at least first geographical location.

11. The ADS development system (1) according to claim 10, further comprising:

a **position determining unit** (108) for *determining* (1008) with support from a positioning system (23), a geographical position of said ADS-equipped vehicle (2) along the selected route; and

a **data collecting unit** (109) for *collecting* (1009) operational data when the vehicle position is within a predeterminable distance of and/or time range from respective one or more of the at least first geographical location.

12. The ADS development system (1) according to claim 11, further comprising:
a **models updating unit** (110) for *updating* (1010) said models with at least a portion of the collected data.

13. An **arrangement,** for instance an **offboard system** (114) and/or a **vehicle** (2), comprising an ADS development system (1) according to any one of claims 7-12.

14. A computer program product comprising a computer program containing computer program code means arranged to cause a computer or a processor to execute the steps of a method according to any of claims 1-6, stored on a computer-readable medium or a carrier wave.

15. A non-volatile computer readable storage medium having stored thereon the computer program product of claim 14.

**EP 4 357 212 A1**

| 101 Policies deriving unit | → | 108<br>Position<br>determ.<br>unit | ---- | 21 ADS system |
|---|---|---|---|---|

| 102 Policy identifying unit | | | | 22 Digital map |

| 103 Locations identifying unit | | 109<br>Data<br>collecting<br>unit | | 23 Positioning<br>system |

| 104 Mapping generating unit | | | | 24 Onboard<br>sensors |

| 105 Map implementing unit | | 110<br>Models<br>updat. unit | | |

| 106 Routes retrieving unit | | 111<br>CPU/GPU | | 2 |

| 107 Route selecting unit | | | | |

114 Offboard system / 113 Vehicle node

112<br>Memory

**Fig. 1**                    1 ADS development system

## Start

1001. Derive from safety req. and models, a set of parameter-specific ADS safe driving policies

1002. Identify at least a first policy inflicted with uncertainty fulfilling criteria

1003. Identify location(s) enabling operational parameter(s) of the identified policy, to be observed

1004. Generate a mapping associating the location(s) with the operational parameter(s)

1005. Implement mapping in digital map accessible from ADS-equipped vehicle

1006. Retrieve potential vehicle routes for the ADS-equipped vehicle

1007. Select route comprising one or more of the location(s)

1008. Determine position of the vehicle

1009. Collect operational data when near location(s)

1010. Update models

## End

Fig. 2

Fig. 3

EP 4 357 212 A1

$$V_i^{safe} = f\left(\left[\lambda_1^i, \dots, x_M^i\right]\right)$$

$$P\left(V_i^{safe}\right) = \int P\left(V_i^{safe} \mid \lambda\right) P(\lambda) \, d\lambda$$

Fig. 4

Europäisches
Patentamt

European
Patent Office

Office européen
des brevets

# EUROPEAN SEARCH REPORT

Application Number

EP 22 20 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/126864 A1 (MOUSTAFA HASSNAA [US] ET AL) 28 April 2022 (2022-04-28) | 1-5, 7-11, 13-15 | INV. B60W30/08 B60W60/00 |
| A | * paragraphs [0266], [0279], [0310], [0920] * | 6,12 | G05D1/00 G05D1/02 G06D1/02 |
| Y | ----- US 2022/001892 A1 (FAIRLEY STUART [US] ET AL) 6 January 2022 (2022-01-06) | 1-5, 7-11, 13-15 | G06N5/00 G06V20/56 |
| A | * paragraphs [0110], [0129] – [0131] * | 6,12 | |
| Y | ----- US 2022/089151 A1 (GYLLENHAMMAR MAGNUS [SE] ET AL) 24 March 2022 (2022-03-24) | 1-5, 7-11, 13-15 | |
| A | * paragraphs [0034] – [0049] * ----- | 6,12 | |

TECHNICAL FIELDS
SEARCHED      (IPC)

B60W
G06V
G06M
G05D
G06N
G06D

The present search report has been drawn up for all claims

| Place of search | Date of completion of the search | Examiner |
|---|---|---|
| Munich | 3 April 2023 | Kerschbaumer, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 20 2948

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2023

| Patent document cited in search report | | Publication date | Patent family member(s) | | Publication date |
|---|---|---|---|---|---|
| US 2022126864 | A1 | 28-04-2022 | CN | 113508066 A | 15-10-2021 |
| | | | CN | 113811473 A | 17-12-2021 |
| | | | CN | 113811474 A | 17-12-2021 |
| | | | CN | 113825689 A | 21-12-2021 |
| | | | DE | 112020001642 T5 | 10-03-2022 |
| | | | DE | 112020001643 T5 | 15-06-2022 |
| | | | DE | 112020001649 T5 | 21-04-2022 |
| | | | DE | 112020001663 T5 | 24-03-2022 |
| | | | EP | 3947080 A1 | 09-02-2022 |
| | | | EP | 3947081 A1 | 09-02-2022 |
| | | | EP | 3947094 A1 | 09-02-2022 |
| | | | EP | 3947095 A1 | 09-02-2022 |
| | | | JP | 2022524920 A | 11-05-2022 |
| | | | JP | 2022524932 A | 11-05-2022 |
| | | | JP | 2022525391 A | 13-05-2022 |
| | | | JP | 2022525586 A | 18-05-2022 |
| | | | KR | 20210134317 A | 09-11-2021 |
| | | | KR | 20210134634 A | 10-11-2021 |
| | | | KR | 20210134635 A | 10-11-2021 |
| | | | KR | 20210134638 A | 10-11-2021 |
| | | | US | 2022126863 A1 | 28-04-2022 |
| | | | US | 2022126864 A1 | 28-04-2022 |
| | | | US | 2022126878 A1 | 28-04-2022 |
| | | | US | 2022161815 A1 | 26-05-2022 |
| | | | WO | 2020205597 A1 | 08-10-2020 |
| | | | WO | 2020205629 A1 | 08-10-2020 |
| | | | WO | 2020205648 A1 | 08-10-2020 |
| | | | WO | 2020205655 A1 | 08-10-2020 |
| US 2022001892 | A1 | 06-01-2022 | EP | 4165476 A1 | 19-04-2023 |
| | | | US | 2022001892 A1 | 06-01-2022 |
| | | | US | 2022258764 A1 | 18-08-2022 |
| | | | US | 2022274627 A1 | 01-09-2022 |
| | | | WO | 2022006418 A1 | 06-01-2022 |
| US 2022089151 | A1 | 24-03-2022 | CN | 114199263 A | 18-03-2022 |
| | | | EP | 3971526 A1 | 23-03-2022 |
| | | | US | 2022089151 A1 | 24-03-2022 |

EPO FORM P0459

For more details about this annex : see Official Journal of the European Patent Office, No. 12/82